(19) Europäisches Patentamt
European Patent Office
Office européen des brevets

(11) **EP 3 730 930 B1**

(12) **EUROPEAN PATENT SPECIFICATION**

(45) Date of publication and mention
of the grant of the patent:
**09.08.2023   Bulletin 2023/32**

(21) Application number: **18890119.3**

(22) Date of filing: **21.11.2018**

(51) International Patent Classification (IPC):
*G01N 35/00* (2006.01)      *A61B 5/00* (2006.01)
*G01N 21/76* (2006.01)

(52) Cooperative Patent Classification (CPC):
**G01N 21/272; G01N 35/00;** G01N 21/6408;
G01N 21/76; G01N 2021/7786

(86) International application number:
**PCT/JP2018/042940**

(87) International publication number:
**WO 2019/123956 (27.06.2019 Gazette 2019/26)**

(54) **SIGNAL PROCESSING DEVICE AND SIGNAL PROCESSING METHOD**

SIGNALVERARBEITUNGSVORRICHTUNG UND SIGNALVERARBEITUNGSVERFAHREN

DISPOSITIF DE TRAITEMENT DE SIGNAL, ET PROCÉDÉ DE TRAITEMENT DE SIGNAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2017   JP 2017242815**

(43) Date of publication of application:
**28.10.2020   Bulletin 2020/44**

(73) Proprietor: **Hitachi High-Tech Corporation**
**Minato-ku**
**Tokyo 105-6409 (JP)**

(72) Inventors:
• **YOSHIDA, Makiko**
**Tokyo 100-8280 (JP)**
• **SASAKI, Shunsuke**
**Tokyo 105-8717 (JP)**
• **TAKAKURA Tatsuki**
**Tokyo 105-8717 (JP)**

(74) Representative: **Strehl Schübel-Hopf & Partner**
**Maximilianstrasse 54**
**80538 München (DE)**

(56) References cited:
**EP-A1- 2 330 426          JP-A- H1 137 921**
**JP-A- S63 101 758        JP-A- 2003 524 753**

JP-A- 2004 125 780      JP-A- 2004 239 790
JP-A- 2005 127 757      JP-A- 2006 023 214
JP-A- 2007 248 089      JP-A- 2008 032 582
JP-A- 2009 192 490      JP-A- 2012 035 152
JP-A- 2013 036 756      JP-B1- 6 126 290
US-A1- 2015 351 673

• Prekopcsák Zoltán ET AL: "Time Series Classification by Class-Based Mahalanobis Distances", Advances in Data Analysis and Classification, 27 June 2011 (2011-06-27), pages 1-14, XP055848909, Retrieved from the Internet: URL:https://www.researchgate.net/publicati on/229024971_Time_Series_Classification_by _Class-Based_Mahalanobis_Distances [retrieved on 2021-10-07]
• Tetsuo Shiba et.al.: "3.6 How to read the chromatogram", Instrument analysis tool (2), 2nd ed., vol. 2, 30 March 1996 (1996-03-30), pages 48-52, XP009520852, ISBN: 4-7598-0293-2
• Japan Spectroscopy Society: "Chapter 5, Analyzing Spectral Data", Spectrometer Q&A, 20 July 2009 (2009-07-20), pages 130-152, XP009520851, DOI: 978-4-06-157110-5

## Description

### Technical Field

The present invention relates to a signal processing apparatus and a signal processing method.

### Background Art

As a measurement method for quantifying a component included in a biological sample such as blood or urine, a method for measuring the concentration of a measurement target component by using a labeling reagent that specifically binds to the target component and emits light when a trigger is applied, is widely used. Examples of the labeling reagent include a radioactive substance, a substance that emits light by chemical reaction, and a substance that fluoresces by irradiation with excitation light. In this measurement method, the signal intensity of the light emission from the labeling reagent after the application of the trigger is measured in time series over a certain period of time, and the integrated value of the signal intensity at the certain period of signal measurement time is converted into the concentration of the target component.

Here, an abnormality in each unit of the apparatus, a change over time in the quality of a biological sample and a labeling reagent, and a measurement abnormality including external noise may affect a time-series signal of the signal intensity of the light, and an error may occur in a concentration measurement value. As methods for detecting such a measurement abnormality, methods described in PTL 1 and PTL 2 have been proposed.

The method described in PTL 1 is to determine a measurement abnormality by comparing a peak time of a measurement target time-series signal with a preset peak time. The method described in PTL 2 is to determine a measurement abnormality by extracting an attenuation amount after a certain period of time from a peak of a measurement target time-series signal and comparing it with an attenuation amount in a normal case.

Furthermore, PTL 1 and PTL 2 describe a method of determining measurement abnormality, in which, on the basis of a time-series signal for use in calculating an integrated value that is converted into the concentration of a measurement target component, a specific one feature amount (the time of peak, and attenuation amount after a certain period of time from the peak, respectively), and determining a measurement abnormality using the one feature amount.

However, many of the abnormalities that can actually occur have only a slight influence on a time-series signal of the emission signal. The present inventors have found that, for example, in an abnormal system using a vessel that has been used for a long time and whose lifespan is over a luminescent substrate solution in which bacteria have proliferated, there is no significant change in the above-described feature amount extracted from a conventional time-series signal.

### Citation List

#### Patent Literature

PTL 1: JP 2007-85804 A
PTL 2: JP 2013-152215 A

US 2015/351673 A1 discloses a fault discrimination system for analysis sensors and systems with the features in the pre-characterizing portion of Claim 1.

### Summary of Invention

#### Technical Problem

It is an object of the present invention to provide a signal processing apparatus and a signal processing method which implement measurement with higher reliability by detecting an abnormality even though such abnormality has only a slight influence on a time-series signal.

#### Solution to Problem

In order to solve the above problems, the present invention suggests the signal processing apparatus and the signal processing method defined in the respective independent claims. Further advantageous features are set out in the dependent claim.

**Advantageous Effects of Invention**

According to the signal processing apparatus and the signal processing method of the present invention, it is possible to provide a signal processing apparatus and a signal processing method which implement measurement with higher reliability by detecting an abnormality even though such abnormality has only a slight influence on a time-series signal.

**Brief Description of Drawings**

[Fig. 1] Fig. 1 shows an exemplified configuration of a signal processing apparatus according to a first embodiment.
[Fig. 2] Fig. 2 shows an exemplified configuration of an automatic analysis apparatus 200 as an example of a first measurement unit 11 and a second measurement unit 12 shown in Fig. 1.
[Fig. 3] Fig. 3 shows an exemplified graph showing a measurement result in a case where 40 pieces of data are acquired from an A/D converter 210A after a trigger signal is generated at a sampling interval of 10 mS and a signal measurement period of 400 mS.
[Fig. 4] Fig. 4 shows an exemplified graph showing a measurement result which is acquired from an A/D converter 210B after a trigger signal is generated at a sampling interval of 250 $\mu$S.
[Fig. 5] Fig. 5 is a flowchart illustrating an exemplified process of determining whether a measurement abnormality occurs or not based on a signal waveform shape of a high-resolution time-series signal in the first embodiment.
[Fig. 6] Fig. 6 is a conceptual diagram showing a method for extracting a peak position of the signal waveform.
[Fig. 7] Fig. 7 is a conceptual diagram illustrating a feature amount calculated from the signal waveform.
[Fig. 8] Fig. 8 shows an exemplified data distribution in a two-dimensional space with the feature amounts s1 and s0, in a case where the feature amounts s1 and s0 are calculated to perform abnormality determination in a measurement system with a reaction vessel that has been used for a long time and whose lifespan is over.
[Fig. 9] Fig. 9 is a flowchart illustrating an exemplified process of determining whether a measurement abnormality occurs or not and determining a type of such measurement abnormality based on a signal waveform shape of a high-resolution time-series signal in a second embodiment.
[Fig. 10] Fig. 10 is a graph showing an operation of the second embodiment.
[Fig. 11] Fig. 11 is a graph showing an operation of the second embodiment.

**Description of Embodiments**

Hereinafter, the present embodiments will be described with reference to the accompanying drawings. In the accompanying drawings, functionally same elements may be denoted by the same numbers. It should be noted that although the accompanying drawings illustrate embodiments and implementation examples in accordance with the principle of the present disclosure, they are intended for the purpose of understanding of the present disclosure and are by no means intended for the purpose of limiting interpretation of the present disclosure. The description herein is merely exemplary and is not intended to limit the scope of the claims or application of the present disclosure in any way.
It should be understood that although the present embodiments have been described in sufficient detail for a person skilled in the art to practice the present disclosure, other implementations and forms are also possible, and changes of the configurations and structures and replacement of various elements are possible without departing from the scope and spirit of the technical idea of the present disclosure. Therefore, the following description should not be interpreted as being limited to this.

**[First embodiment]**

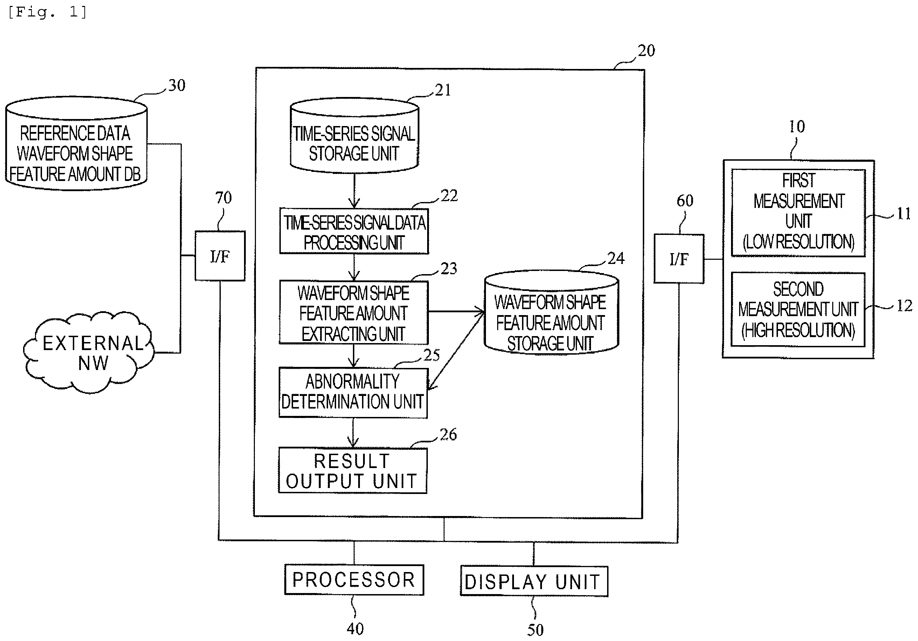

Fig. 1 shows an exemplified configuration of a signal processing apparatus according to a first embodiment of the present invention. This signal processing apparatus generally includes a measuring unit 10, a signal processing unit 20, a reference data waveform shape feature amount database 30, a processor 40, and a display unit 50, and these components and an external network are connected by interfaces 60 and 70 so that data can be exchanged.
The measuring unit 10 includes a measurement unit that measures the signal intensity in time series over a certain period of time, and includes a plurality of measuring means capable of measuring different time resolutions. In the illustrated example, the measuring unit 10 includes two measurement means of a first measurement unit 11 which acquires a time-series signal (first time-series signal) with a low time resolution and a second measurement unit 12 which acquires a time-series signal (second time-series signal) with a high time resolution, but it can include three or more measurement means.

The first measurement unit 11 and the second measurement unit 12 are, for example, automatic analysis apparatuses that analyze a body fluid component such as blood and urine as a specimen. In a normal component analysis, the measurement result of the first measurement unit 11 with a low time resolution is used. The measurement result of the second measurement unit 12 with a high time resolution is used for determination of a measurement abnormality. This will be explained in detail later.

In the medical care site where such an automatic analysis apparatus is installed, medical care based on the results of the test conducted on the day of the medical consultation is becoming established, and it is desired to speed up the clinical test. At the same time, it has become more important how a clinical test apparatus ensures the accuracy of measurement results. In recent years, improvements in the performance of automatic analysis apparatuses have made it possible to analyze various items with high accuracy even with a slight amount of a sample and a reagent. On the other hand, a slight abnormality in each unit of the apparatus, a slight change over time in the quality of the sample and the reagent, and a slight external noise may affect the accuracy of the measurement result. It is considered that the reliability of measurement results can be improved by automatically and rapidly detecting these measurement abnormalities. The signal processing apparatus according to the first embodiment has the features described below, so that a measurement abnormality can be quickly detected and the reliability of a measurement result can be improved.

The signal processing unit 20 includes a time-series signal storage unit 21, a time-series signal data processing unit 22, a waveform shape feature amount extracting unit 23, a waveform shape feature amount storage unit 24, an abnormality determination unit 25, and a result output unit 26.

The time-series signal newly acquired by the measuring unit 10 is first stored in the time-series signal storage unit 21, and then subjected to predetermined data processing by the time-series signal data processing unit 22. The time-series signal data processing unit 22 processes the measurement result (time-series signal) of the first measurement unit 11 and the second measurement unit 12, and performs analysis and other necessary data calculation.

The waveform shape feature amount extracting unit 23 has a function of extracting a feature amount (waveform shape feature amount: hereinafter, may be simply referred to as "feature amount") of the shape of the signal waveform of the measurement signal acquired by the second measurement unit 12. The extracted waveform shape feature amount is stored in the waveform shape feature amount storage unit 24.

The abnormality determination unit 25 performs an abnormality determination by comparing a waveform shape feature amount newly measured and stored in the waveform shape feature amount storage unit 24 with a waveform shape feature amount of reference data accumulated in the reference data waveform shape feature amount database 30. The result output unit 26 outputs the result of the abnormality determination to the display unit 50 and the like. The processor 40 executes various types of data processing in cooperation with the signal processing unit 20. The display unit 50 is a device such as a liquid crystal display, an organic EL display, or a printer, which is capable of outputting the result of the abnormality determination and other measurement results.

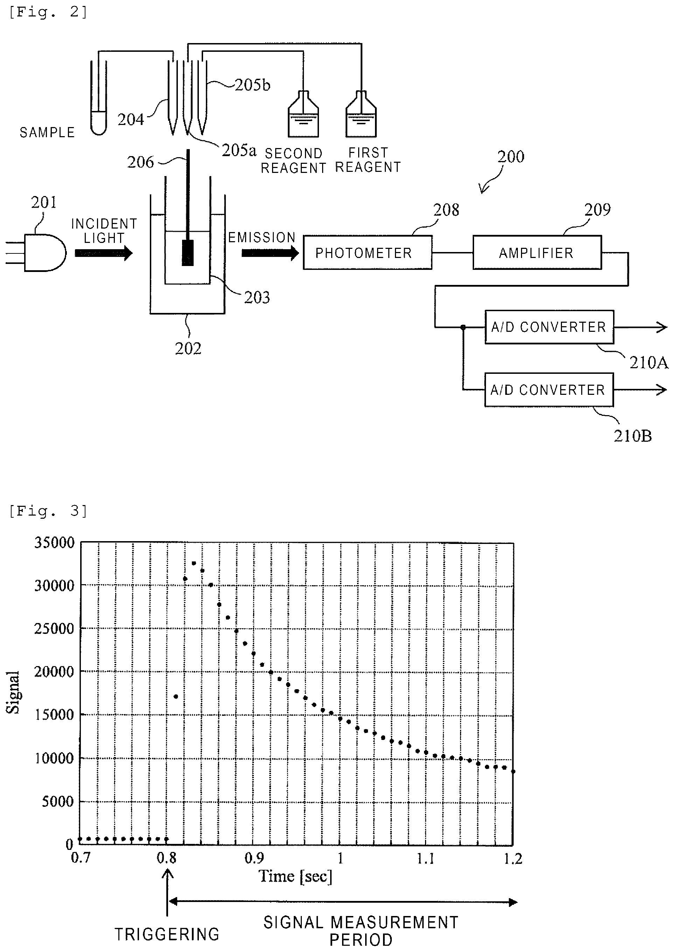

Fig. 2 shows an exemplified configuration of an automatic analysis apparatus 200 as an example of the first measurement unit 11 and the second measurement unit 12. The automatic analysis apparatus 200 includes, as an example, a light source 201, a thermostatic chamber 202, a cell 203, a sample dispensing nozzle 204, a first reagent dispensing nozzle 205a, a second reagent dispensing nozzle 205b, a stirring mechanism 206, a photometer 208, an amplifier 209, and A/D converters 210A and 210B. At the time of analysis, the light emitted from the light source (LED) 201 is irradiated to the cell 203 immersed in the thermostatic chamber 202, and the light emitted from the sample enters the photometer 208. The detection signal of the photometer 208 is amplified by the amplifier 209. The amplified signal (analog signal) is converted into digital signals by the A/D converters 210A and 210B and output. The A/D converter 210A has a small sampling frequency (large sampling interval) and functions as the first measurement unit 11 (low resolution) in Fig. 1. On the other hand, the A/D converter 210B performs sampling at a sampling frequency larger than (smaller sampling interval) that of the A/D converter 210A and functions as the second measurement unit 12 in Fig. 1. As an example, the sampling interval of the A/D converter 210A can be set to about 10 mS to 50 mS, and the sampling interval of the A/D converter 210B can be set to about 100 $\mu$S to 300 $\mu$S.

The cell 203 is a reaction vessel for reacting a test target sample with a reagent. A sample is injected into the cell 203 from the sample dispensing nozzle 204, a first reagent is dispensed from the first reagent dispensing nozzle 205a, and a second reagent is dispensed from the second reagent dispensing nozzle 205b. When these sample and reagents are stirred by the stirring mechanism 206, a chemical reaction occurs inside the cell 203. The concentration of the analysis target in the sample can be measured by measuring the luminosity (photometry) of the chemical reaction in time series.

Fig. 3 shows an exemplified graph showing a measurement result in a case where 40 pieces of data are acquired at the A/D converter 210A after a trigger signal is generated at a sampling interval of 10 mS and a signal measurement period of 400 mS. These 40 pieces of measurement data are integrated over the signal measurement period (400 mS) in the time-series signal data processing unit 22 of the signal processing unit 20, and the concentration of the test target component is determined based on the acquired integrated value.

Even in such a time-series signal with a low time resolution, if any measurement abnormality occurs, it may appear as a deviation in the magnitude or position of the peak of the time-series signal. However, the present inventors have noticed that there is a measurement abnormality which does not appear as such deviation of the magnitude or position of the peak and is difficult to determine. Therefore, in the first embodiment, in addition to acquiring a signal with a low time resolution used for the original analysis from the A/D converter 210A, a signal with a high time resolution is acquired from the A/D converter 210B, and whether a measurement abnormality occurs or not is determined based on the signal with the high time resolution. Specifically, while a signal with a low time resolution is acquired from the A/D converter 210A (first measurement unit 11) and used for the original measurement, a signal with a higher time resolution than this is acquired from the A/D converter 210B (second measurement unit 12) periodically (e.g., every week), at a predetermined timing (at the time of starting the apparatus every morning, standby state), or where necessary when a measurement abnormality is suspected, thereby determining whether a measurement abnormality occurs or not.

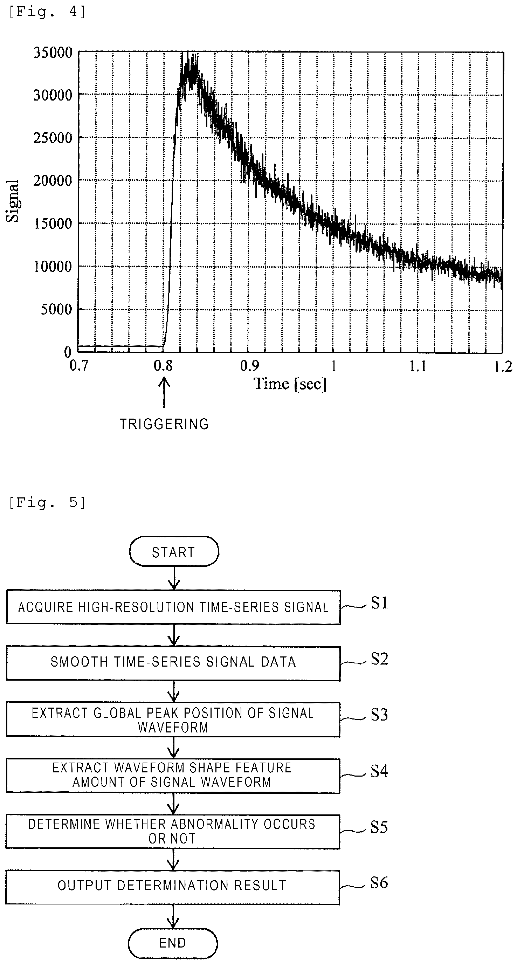

Fig. 4 shows an example of a high-resolution time-series signal which is acquired from the A/D converter 210B after a trigger signal is generated at a sampling interval of 250 μS. The high-resolution time-series signal from the A/D converter 210B may be acquired over the entire signal measurement time of the low time resolution signal from the A/D converter 210A, or may be acquired only for a time region shorter than the signal measurement time, depending on the shape to be noted of the acquired high-resolution time-series signal.

An example of a processing method for determining whether a measurement abnormality occurs or not based on the shape of the signal waveform of a high-resolution time-series signal will be described below with reference to the flowchart of Fig. 5.

As described above, a normal specimen analysis is performed based on the low resolution time-series signal from the A/D converter 210A, but the high-resolution time-series signal from the A/D converter 210B is used when a measurement abnormality of the apparatus is determined by a periodic test and a test where necessary.

When a high-resolution time-series signal is acquired from the A/D converter 210B and stored in the time-series signal storage unit 21 (Step S1), the time-series signal data processing unit 22 first performs smoothing the data in order to extract the shape of the signal waveform while reducing the influence of noise (Step S2). A general smoothing technique such as low-pass filtering using fast Fourier transform, average value filtering, and median filtering can be used for smoothing.

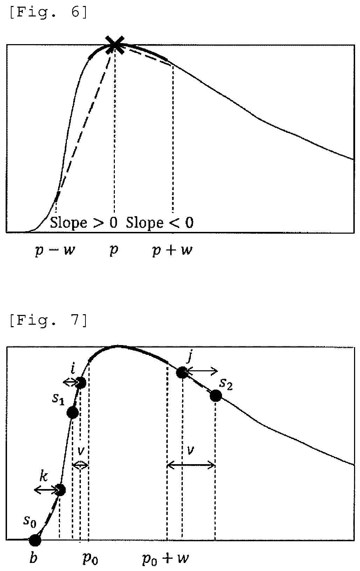

Next, the position of the peak seen in the signal waveform is extracted (Step S3). An extraction method of the position of the peak will be described with reference to Fig. 6. As a method for extracting a global peak portion in a time-series signal after smoothing, avoiding detection of a local minute peak due to noise, for example, a position p defined by the following equation [Equation 1] is extracted as a peak portion.

[Equation 1]

$$y(p) - y(p-w) > 0 \quad \text{and} \quad y(p+w) - y(p) < 0$$

This corresponds to extracting, as a peak portion, a point where the slope changes from positive to negative in a section having a certain time width w in the smoothed time-series signal. Here, w is any value including the peak portion to be extracted. The smaller the value of w becomes, the more it is likely to detect a local minute peak. The optimum value for w can be determined by exhaustive search according to the data.

Next, a waveform shape feature amount representing the shape of the signal waveform is extracted from the smoothed time-series signal (Step S4). For example, the local slope of the signal waveform is calculated as the following feature amounts $s_0$, $s_1$, and $s_2$.

[Equation 2]

$$s_0 = \frac{\tilde{y}(b+k) - \tilde{y}(b)}{x(b+k) - x(b)}$$

$$s_1 = \frac{\tilde{y}(p_0 - v + i) - \tilde{y}(p_0 - v)}{x(p_0 - v + i) - x(p_0 - v)}$$

$$s_2 = \frac{\tilde{y}(p_0 + w + v) - \tilde{y}(p_0 + w + v - j)}{x(p_0 + w + v) - x(p_0 + w + v - j)}$$

Here, ~y is a normalized signal intensity obtained by normalizing the time-series signal by the maximum signal strength, and x is a function of time. b indicates the time at which the time-series signal rises, $p_0$ indicates the time at which the peak portion starts, and v indicates the time width from the starting point and the end point of the peak portion. In addition, w indicates the time width of the peak portion. In addition, i, j, and k indicate minute time widths at which the slope at each point is calculated.

The feature amount $s_0$ is a feature amount corresponding to the slope at the rising point of the time-series signal. As an example, the feature amount $s_0$ can be calculated as a feature amount corresponding to the slope of a minute section k (b to b+k) at a time b when the time-series signal rises by the trigger signal, as shown in the above equation and Fig. 7. The feature amount $s_1$ is a feature amount corresponding to the slope in a vicinity of the starting point of the peak portion ($p_0$ to $p_0$+w) including the peak position p extracted in Step s3. As an example, the feature amount $s_1$ can be calculated as a feature amount corresponding to the slope of a minute section i ($p_0$-v to $p_0$-v+i) at a time prior to the time $p_0$ of the starting point of the peak portion by the time width v as shown in the above equation and Fig. 7. The feature amount $s_2$ is a feature amount corresponding to the slope in a vicinity of the end point of the peak portion ($p_0$ to $p_0$+w) including the peak position p extracted in Step s3. As an example, the feature amount $s_2$ can be calculated as a feature amount corresponding to the slope of a minute section j ($p_0$+w+v-j to $p_0$+w+v) at a time prior to the time $p_0$+w of the end point of the peak portion by the time width v as shown in the above equation and Fig. 7.

As for i, j, and k, i, j, and k are searched in an exhaustive manner, such that the difference between normal data when it is judged that there is no measurement abnormality, and data when it is judged that there is a measurement abnormality, becomes the largest. Based on this search result, the values of i, j, and k are determined.

Thereafter, in Step S5, whether a measurement abnormality occurs or not in the measuring unit 10 is determined based on the waveform shape feature amounts $s_0$, $s_1$, and $s_2$ calculated in Step S4. As a method for determining whether a measurement abnormality occurs or not, a discriminant analysis based on Mahalanobis generalized distance can be used. The Mahalanobis generalized distance D is a distance from a data cluster generalized in consideration of the distribution of data within the cluster, and is defined by the following equation.

[Equation 3]

$$D^2 = (x - \mu)^T S^{-1} (x - \mu)$$

Here, $\chi$ is a feature amount vector of data (e.g., feature amounts $s_0$, $s_1$, and $s_2$) for which a distance is to be obtained, $\mu$ is a mean of the feature amount vectors of data in the cluster, and S is a variance-covariance matrix of the feature amount vectors of data in the cluster. In the discriminant analysis based on the Mahalanobis generalized distance D, the Mahalanobis generalized distances $D^2_{Normal}$ and $D^2_{Abnormal}$ from the normal reference data cluster (measurement data group obtained by normal measurement) and the abnormal reference data cluster (measurement data group obtained by measurement in a predetermined abnormal state), respectively, are obtained with respect to the feature amount of a new time-series signal, and the magnitude relation between them is determined, thereby judging whether the measurement is normal or abnormal. Specifically, the judgment shown on the right side of the equation is performed when the magnitude relation becomes the following discriminant function.

[Equation 4]

$$\begin{cases} D^2_{Normal} > D^2_{Abnormal} & \text{ABNORMAL} \\ D^2_{Normal} \leq D^2_{Abnormal} & \text{NORMAL} \end{cases}$$

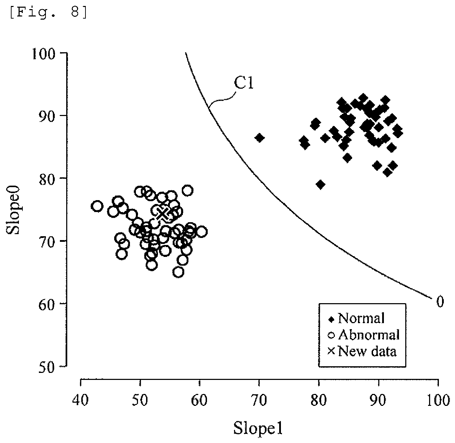

Fig. 8 shows an exemplified data distribution in a two-dimensional space with the feature amounts $s_1$ and $s_0$, in a case where the feature amounts $s_1$ and $s_0$ are calculated to perform abnormality determination in a measurement system with a reaction vessel that has been used for a long time and whose lifespan is over. In the graph of Fig. 8, the horizontal axis (slope1) indicates the distribution of the Mahalanobis generalized distance of the feature amount s1, and the vertical axis (slope0) indicates the distribution of the Mahalanobis generalized distance of the feature amount $s_0$. This graph of Fig. 8 can be displayed on the display unit 50, and when presented to the operator, it can indicate whether or not a measurement abnormality exists in the newly acquired time-series signal (measurement result).

In the graph of Fig. 8, black diamond dots are data determined to be normal, and white circle dots are data determined to be abnormal. A curve C1 in Fig. 8 indicates a position where $D^2_{Normal} = D^2_{Abnormal}$ for the feature amounts $s_1$ and $s_0$. The measurement result on one side across the curve C1 is judged to be normal, and the measurement result on the other side can be judged to be abnormal.

In the case of determination as to whether an abnormality occurs or not based on only one feature amount, there may be a case where the data determined to be normal and the data determined to be abnormal come close to each other, and it is difficult to judge whether the measurement is normal or abnormal. However, in the case of performing determination as to whether an abnormality occurs or not based on two or more feature amounts as shown in Fig. 8, the boundary between the data determined to be normal and the data determined to be abnormal becomes clear, and the determination as to whether a measurement abnormality occurs or not can be performed accurately and quickly. Although Fig. 8 shows a case of determination based on two feature amounts, use of three or more feature amounts makes it possible to more accurately determine as to whether an abnormality occurs or not.

As described above, according to the signal processing apparatus of the first embodiment, while performing a normal measurement with a low resolution time-series signal, acquiring, separately from this, and analyzing a high-resolution time-series signal, thereby allowing a measurement abnormality of the measuring apparatus to be accurately detected. Since the high-resolution time-series signal can be appropriately performed at the timing of determination of the measurement abnormality, it is possible to appropriately perform determination of a measurement abnormality without increasing the time required for normal measurement.

In the above example, in the determination as to whether the abnormality occurs or not, using both normal reference data and abnormal reference data, the Mahalanobis generalized distance $D^2_{Normal}$ based on the normal reference data and the Mahalanobis generalized distance $D^2_{Abnormal}$ based on the abnormal reference data are obtained, and the magnitude relation between them is compared to perform abnormality determination. However, the abnormality determination is not limited to this, and, for example, the abnormality determination can be performed using only the Mahalanobis generalized distance $D^2_{Normal}$ based on normal reference data. The Mahalanobis generalized distance is found to follow an F distribution of a first degree of freedom p and a second degree of freedom n. Here, p is the number of feature amounts and n is the number of data. Using this property and setting the discrimination criterion to p value = 0.05, the discriminant function can be defined as follows.

[Equation 5]

$$\begin{cases} D^2_{Normal} > F(p, n, 0.05) & \text{ABNORMAL} \\ D^2_{Normal} \leq F(p, n, 0.05) & \text{NORMAL} \end{cases}$$

It is not only possible to use the various discriminant functions shown in the above example for general purposes, but also possible to define them for each apparatus.

**[Second embodiment]**

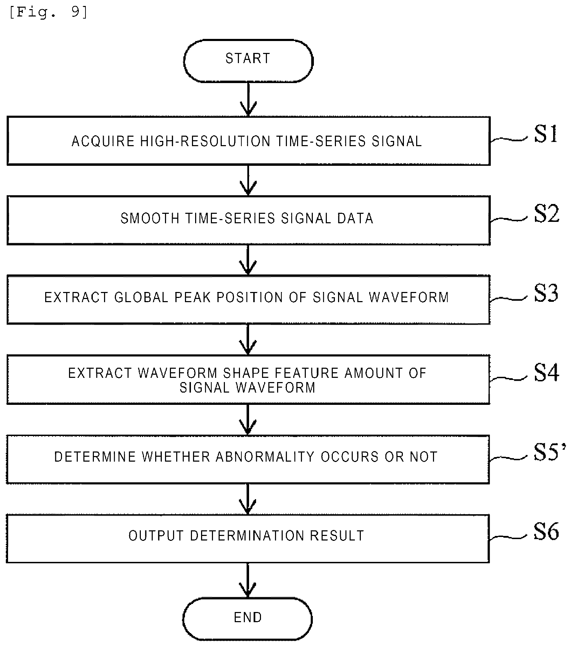

Next, a signal processing apparatus according to the second embodiment will be described with reference to Figs. 9 to 11. Since the overall configuration of the apparatus is similar to that of the first embodiment (Fig. 1), redundant descriptions will be omitted below. In the second embodiment, the abnormality determination unit 25 is configured to estimate not only whether a measurement abnormality occurs or not but also a type of the measurement abnormality based on the shape of the signal waveform of a high-resolution time-series signal acquired from the A/D converter 210B. The types of measurement abnormalities include, for example, abnormalities in each unit of the apparatus, abnormalities in the quality of the sample and the labeling reagent due to changes over time, abnormalities based on external noise, abnormalities based on a so-called hook effect (acquiring a measurement result of a pseudo-low numerical value from a specimen with a high concentration), and measurement abnormalities based on reaction inhibitors contained in the specimen.

In the specific example described below, an example in which two types of measurement abnormalities are identified, i.e., an abnormality in the cell 203 and an abnormality based on the hook effect, is explained. However, this is only an example, and another kind of measurement abnormality can be detected, and the number of types of measurement abnormalities detected at the same time is not limited to two types but can be three or more types.

With reference to the flowchart of Fig. 9, an example of processing for determining whether a measurement abnormality occurs or not and the type thereof based on the shape of the signal waveform of a high-resolution time-series signal will be described. Here, an example in which the three types of feature amounts $s_1$, $s_2$, and $s_0$ described in the first embodiment are acquired from the high-resolution time-series signal, and the Mahalanobis generalized distance is calculated for each of them will be described.

Similar to the first embodiment, a high-resolution time-series signal is acquired and stored (Step S1), smoothing is performed (Step S2), and the position of the peak of a signal waveform is extracted (Step S3). Next, in Step S4, the feature amounts $s_0$, $s_1$, and $s_2$ are calculated, and in Step S5', whether an abnormality occurs or not and its type are determined. In Step S6, the determination result is output.

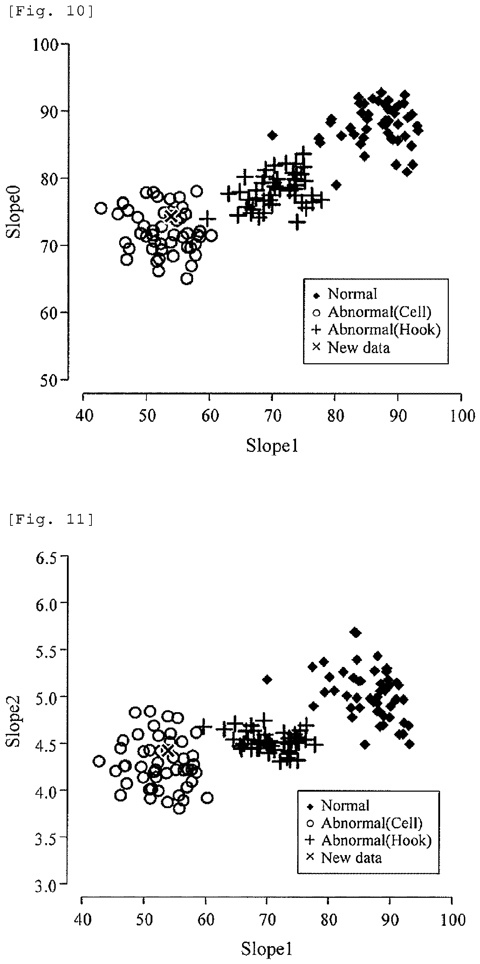

The determination as to whether a measurement abnormality occurs or not and its type based on the feature amounts $s_0$, $s_1$, and $s_2$ in Step S5' will be described with reference to Figs. 10 and 11. Fig. 10 and Fig. 11 are exemplified graphs in which measurement results in accordance with the second embodiment are plotted. The horizontal axis of Fig. 10 corresponds to the feature amount $s_1$, and the vertical axis corresponds to the feature amount $s_0$. The horizontal axis of Fig. 11 corresponds to the feature amount $s_1$, and the vertical axis corresponds to the feature amount $s_2$. That is, Figs. 10 and 11 show the Mahalanobis generalized distances of the feature amounts $s_0$, $s_1$, and $s_2$ are expressed in three-dimensional coordinates.

In this second embodiment, the Mahalanobis generalized distance of the feature amount is calculated, whether a measurement abnormality occurs or not is determined based on this Mahalanobis generalized distance, and the type of measurement can also be determined. That is, Mahalanobis generalized distances $D^2_{Normal}$, $D^2_{AbnormalH}$, and $D^2_{AbnormalC}$ from the normal reference data cluster, the hook phenomenon derived abnormal reference data cluster, and the cell derived abnormal reference data cluster, respectively, are obtained for a new time-series signal, and the magnitude relation among them is determined, thereby making it possible to judge whether the measurement is normal or abnormal. In the graphs of Figs. 10 and 11, black diamond dots are data determined to be normal, cross dots are data determined to be abnormal in measurement due to a hook phenomenon, and white circle dots are data determined to be abnormal in measurement due to elapse of lifespan of the cell.

As described above, according to the second embodiment, it is possible to achieve the identical effects to those of the first embodiment, and it is also possible to determine the type of measurement abnormalities.

While some embodiments of the present invention have been described above, these embodiments are presented by way of example only and are not intended to limit the scope of the invention. These new embodiments can be implemented in various other forms, and various omissions, substitutions, and modifications can be made without departing from the scope of the invention, as defined by the appended claims.

| 10 | measuring unit |
| 11 | first measurement unit |
| 12 | second measurement unit |
| 20 | signal processing unit |
| 21 | time-series signal storage unit |
| 22 | time-series signal data processing unit |
| 23 | waveform shape feature amount extracting unit |
| 24 | waveform shape feature amount storage unit |
| 25 | abnormality determination unit |
| 26 | result output unit |
| 30 | reference data waveform shape feature amount database |
| 40 | processor |

| 50 | display unit |
|---|---|
| 60 | interface |
| 70 | interface |
| 200 | automatic analysis apparatus |
| 201 | light source (LED) |
| 202 | thermostatic chamber |
| 203 | cell |
| 204 | sample dispensing nozzle |
| 205a | first reagent dispensing nozzle |
| 205b | second reagent dispensing nozzle |
| 206 | stirring mechanism |
| 208 | photometer |
| 209 | amplifier |
| 210A, 210B | A/D converter |

**Claims**

1. A signal processing apparatus, comprising:

   an automatic analysis apparatus (200) for analyzing a body fluid component of a specimen sample based on a detection signal from the specimen sample, the automatic analysis apparatus comprising

   a first A/D converter (210A) configured to sample the detection signal with a first sampling frequency and thus to acquire a first time-series signal with a first time resolution as the basis for analyzing the body fluid component of the specimen sample; and
   a second A/D converter (210B) configured to sample the detection signal with a second sampling frequency higher than the first sampling frequency and thus to acquire a second time-series signal with a second time resolution higher than the first time resolution;

   a data processing unit (20) configured to process the second time-series signal; and
   a determination unit (25) configured to determine a measurement abnormality of the automatic analysis apparatus;
   **characterized in that**
   the data processing unit is configured to smooth the second time-series signal in order to extract a peak position of the smoothed second time-series signal; and
   the determination unit is configured to extract a waveform shape feature amount associated with a peak position of the smoothed second time-series signal from the smoothed second time-series signal, to acquire a Mahalanobis distance between the extracted waveform shape feature amount and a reference data cluster of waveform shape feature amounts, and to determine the measurement abnormality of the automatic analysis apparatus based on the acquired Mahalanobis distance.

2. The signal processing apparatus according to Claim 1,

   wherein the reference data cluster includes a normal reference data cluster which is a measurement data group based on normal measurement and an abnormality reference data cluster which is a measurement data group based on measurement in a predetermined abnormal state, and
   the determination unit (25) is configured to compare a Mahalanobis distance from the normal reference data cluster of the waveform shape feature amount with a Mahalanobis distance from the abnormality reference data cluster of the waveform shape feature amount, and to determine a measurement abnormality based on a comparison result.

3. A signal processing method performed on a detection signal from a specimen sample as the basis for analyzing a body fluid component of the specimen sample, comprising:

   a first measurement step of sampling the detection signal with a first sampling frequency and thus acquiring a first time-series signal with a first time resolution as the basis for analyzing the body fluid component of the specimen sample;

a second measurement step of sampling the detection signal with a second sampling frequency higher than the first sampling frequency and thus acquiring a second time-series signal with a second time resolution higher than the first time resolution;

a signal processing step of smoothing the second time-series signal to extract a peak position of the smoothed second time-series signal; and

a determination step of extracting a waveform shape feature amount associated with a peak position of the smoothed second time-series signal from the smoothed second time-series signal, acquiring a Mahalanobis distance between the extracted waveform shape feature amount and a reference data cluster of waveform shape feature amounts, and determining a measurement abnormality of the automatic analysis apparatus based on the acquired Mahalanobis distance.

**Patentansprüche**

1. Signalverarbeitungsvorrichtung, umfassend:

eine automatische Analysevorrichtung (200) zum Analysieren einer Körperflüssigkeitskomponente einer Probe auf der Grundlage eines Detektionssignals von der Probe, wobei die automatische Analysevorrichtung umfasst

einen ersten A/D-Wandler (210A), der dazu eingerichtet ist, das Detektionssignal mit einer ersten Abtastfrequenz abzutasten und somit ein erstes Zeitreihensignal mit einer ersten Zeitauflösung als Grundlage für die Analyse der Körperflüssigkeitskomponente der Probe zu erfassen; und

einen zweiten A/D-Wandler (21 0B), der dazu eingerichtet ist, das Detektionssignal mit einer zweiten Abtastfrequenz abzutasten, die höher ist als die erste Abtastfrequenz, und somit ein zweites Zeitreihensignal mit einer zweiten Zeitauflösung zu erfassen, die höher ist als die erste Zeitauflösung;

eine Datenverarbeitungseinheit (20), die dazu eingerichtet ist, das zweite Zeitreihensignals zu verarbeiten; und

eine Bestimmungseinheit (25), die dazu eingerichtet ist, eine Messanormalität der automatischen Analysevorrichtung zu bestimmen;

**dadurch gekennzeichnet, dass**

die Datenverarbeitungseinheit dazu eingerichtet ist, das zweite Zeitreihensignal zu glätten, um eine Spitzenposition des geglätteten zweiten Zeitreihensignals zu extrahieren; und

die Bestimmungseinheit dazu eingerichtet ist, einen Wellenform-Merkmalsbetrag, der einer Spitzenposition des geglätteten zweiten Zeitreihensignals verknüpft ist, aus dem geglätteten zweiten Zeitreihensignal zu extrahieren, einen Mahalanobis-Abstand zwischen dem extrahierten Wellenform-Merkmalsbetrag und einem Referenzdatencluster von Wellenform-Merkmalsbeträgen zu erfassen und die Messanormalität der automatischen Analysevorrichtung auf der Grundlage des erfassten Mahalanobis-Abstands zu bestimmen.

2. Signalverarbeitungsvorrichtung nach Anspruch 1,

wobei das Referenzdatencluster ein normales Referenzdatencluster, das eine auf einer normalen Messung basierende Messdatengruppe ist, und ein Anormalitätsreferenzdatencluster, das eine auf einer Messung in einem vorgegebenen anormalen Zustand basierende Messdatengruppe ist, enthält, und

die Bestimmungseinheit (25) dazu eingerichtet ist, einen Mahalanobis-Abstand vom normalen Referenzdatencluster des Wellenform-Merkmalsbetrags mit einem Mahalanobis-Abstand vom Anormalitätsreferenzdatencluster des Wellenform-Merkmalbetrags zu vergleichen und eine Messanormalität auf der Grundlage eines Vergleichsergebnisses zu bestimmen.

3. Signalverarbeitungsverfahren, ausgeführt an einem Erfassungssignal von einer Probe als Grundlage für die Analyse einer Körperflüssigkeitskomponente der Probe, umfassend:

einen ersten Messschritt, bei dem das Detektionssignal mit einer ersten Abtastfrequenz abgetastet wird und so ein erstes Zeitreihensignal mit einer ersten zeitlichen Auflösung als Grundlage für die Analyse der Körperflüssigkeitskomponente der Probe erfasst wird;

einen zweiten Messschritt, bei dem das Detektionssignal mit einer zweiten Abtastfrequenz abgetastet wird, die höher ist als die erste Abtastfrequenz, und so ein zweites Zeitreihensignal mit einer zweiten Zeitauflösung, die höher als die erste Zeitauflösung ist, erfasst wird;

einen Signalverarbeitungsschritt zum Glätten des zweiten Zeitreihensignals, um eine Spitzenposition des geglätteten zweiten Zeitreihensignals zu extrahieren; und

einen Bestimmungsschritt, bei dem ein Wellenform-Merkmalsbetrag, der mit einer Spitzenposition des geglätteten zweiten Zeitreihensignals verknüpft ist, aus dem geglätteten zweiten Zeitreihensignal extrahiert wird, ein Mahalanobis-Abstand zwischen dem extrahierten Wellenform-Merkmalsbetrag und einem Referenzdatencluster von Wellenform-Merkmalsbeträgen erfasst wird und eine Messanormalität der automatischen Analysevorrichtung auf der Grundlage des erfassten Mahalanobis-Abstands bestimmt wird.

**Revendications**

1. Appareil de traitement de signal, comprenant :

un appareil (200) d'analyse automatique pour analyser un composant de fluide corporel d'un échantillon éprouvette sur la base d'un signal de détection provenant de l'échantillon éprouvette, l'appareil d'analyse automatique comprenant

un premier convertisseur A/N (210A) configuré pour échantillonner le signal de détection avec une première fréquence d'échantillonnage et pour ainsi acquérir un premier signal en série chronologique avec une première résolution temporelle comme la base pour analyser le composant de fluide corporel de l'échantillon éprouvette ; et

un deuxième convertisseur A/N (210B) configuré pour échantillonner le signal de détection avec une deuxième fréquence d'échantillonnage supérieure à la première fréquence d'échantillonnage et pour ainsi acquérir un deuxième signal en série chronologique avec une deuxième résolution temporelle supérieure à la première résolution temporelle ;

une unité (20) de traitement de données configurée pour traiter le deuxième signal en série chronologique ; et

une unité (25) de détermination configurée pour déterminer une anomalie de mesure de l'appareil d'analyse automatique ;

**caractérisé en ce que**

l'unité de traitement de données est configurée pour lisser le deuxième signal en série chronologique afin d'extraire une position de pic du deuxième signal en série chronologique lissé ; et

l'unité de détermination est configurée pour extraire une quantité de caractéristique de forme de forme d'onde associée avec une position de pic du deuxième signal en série chronologique lissé depuis le deuxième signal en série chronologique lissé, pour acquérir une distance de Mahalanobis entre la quantité de caractéristique de forme de forme d'onde extraite et un groupement de données de référence de quantités de caractéristique de forme de forme d'onde, et pour déterminer l'anomalie de mesure de l'appareil d'analyse automatique sur la base de la distance de Mahalanobis acquise.

2. Appareil de traitement de signal selon la revendication 1,

dans lequel le groupement de données de référence inclut un groupement de données de référence normal qui est un groupement de données de mesure basé sur une mesure normale et un groupement de données de référence d'anomalie qui est un groupement de données de mesure basé sur une mesure dans un état anormal prédéterminé, et

l'unité (25) de détermination est configurée pour comparer une distance de Mahalanobis du groupement de données de référence normal de la quantité de caractéristique de forme de forme d'onde avec une distance de Mahalanobis du groupement de données de référence d'anomalie de la quantité de caractéristique de forme de forme d'onde, et pour déterminer une anomalie de mesure sur la base d'un résultat de comparaison.

3. Procédé de traitement de signal mis en oeuvre sur un signal de détection provenant d'un échantillon éprouvette comme la base pour analyser un composant de fluide corporel de l'échantillon éprouvette, comprenant :

une première étape de mesure pour échantillonner le signal de détection avec une première fréquence d'échantillonnage et ainsi acquérir un premier signal en série chronologique avec une première résolution temporelle comme la base pour analyser le composant de fluide corporel de l'échantillon éprouvette ;

une deuxième étape de mesure pour échantillonner le signal de détection avec une deuxième fréquence d'échantillonnage supérieure à la première fréquence d'échantillonnage et ainsi acquérir un deuxième signal en série chronologique avec une deuxième résolution temporelle supérieure à la première résolution temporelle ;

une étape de traitement de signal pour lisser le deuxième signal en série chronologique pour extraire une position de pic du deuxième signal en série chronologique lissé ; et

une étape de détermination pour extraire une quantité de caractéristique de forme de forme d'onde associée avec une position de pic du deuxième signal en série chronologique lissé depuis le deuxième signal en série chronologique lissé, acquérir une distance de Mahalanobis entre la quantité de caractéristique de forme de forme d'onde extraite et un groupement de données de référence de quantités de caractéristique de forme de forme d'onde, et déterminer une anomalie de mesure de l'appareil d'analyse automatique sur la base de la distance de Mahalanobis acquise.

[Fig. 1]

EP 3 730 930 B1

[Fig. 2]

[Fig. 3]

[Fig. 4]

TRIGGERING

[Fig. 5]

```
                    ┌─────────────┐
                    │    START    │
                    └─────────────┘
                           │
                           ▼
┌──────────────────────────────────────────────────┐
│   ACQUIRE HIGH-RESOLUTION TIME-SERIES SIGNAL       │ ⌇ S1
└──────────────────────────────────────────────────┘
                           │
                           ▼
┌──────────────────────────────────────────────────┐
│       SMOOTH TIME-SERIES SIGNAL DATA               │ ⌇ S2
└──────────────────────────────────────────────────┘
                           │
                           ▼
┌──────────────────────────────────────────────────┐
│      EXTRACT GLOBAL PEAK POSITION OF SIGNAL        │ ⌇ S3
│                  WAVEFORM                          │
└──────────────────────────────────────────────────┘
                           │
                           ▼
┌──────────────────────────────────────────────────┐
│        EXTRACT WAVEFORM SHAPE FEATURE              │ ⌇ S4
│         AMOUNT OF SIGNAL WAVEFORM                  │
└──────────────────────────────────────────────────┘
                           │
                           ▼
┌──────────────────────────────────────────────────┐
│     DETERMINE WHETHER ABNORMALITY OCCURS           │ ⌇ S5
│                  OR NOT                            │
└──────────────────────────────────────────────────┘
                           │
                           ▼
┌──────────────────────────────────────────────────┐
│        OUTPUT DETERMINATION RESULT                 │ ⌇ S6
└──────────────────────────────────────────────────┘
                           │
                           ▼
                    ┌─────────────┐
                    │     END     │
                    └─────────────┘
```

[Fig. 6]

Slope > 0  Slope < 0

$p - w$     $p$     $p + w$

[Fig. 7]

$b$     $p_0$     $p_0 + w$

[Fig. 8]

[Fig. 9]

```
                    ┌─────────────┐
                    │    START    │
                    └──────┬──────┘
                           │
                           ▼
        ┌──────────────────────────────────────────┐        ___ S1
        │  ACQUIRE HIGH-RESOLUTION TIME-SERIES SIGNAL │
        └──────────────────┬───────────────────────┘
                           │
                           ▼
        ┌──────────────────────────────────────────┐        ___ S2
        │       SMOOTH TIME-SERIES SIGNAL DATA       │
        └──────────────────┬───────────────────────┘
                           │
                           ▼
        ┌──────────────────────────────────────────┐        ___ S3
        │  EXTRACT GLOBAL PEAK POSITION OF SIGNAL WAVEFORM │
        └──────────────────┬───────────────────────┘
                           │
                           ▼
        ┌──────────────────────────────────────────┐        ___ S4
        │      EXTRACT WAVEFORM SHAPE FEATURE AMOUNT OF │
        │              SIGNAL WAVEFORM               │
        └──────────────────┬───────────────────────┘
                           │
                           ▼
        ┌──────────────────────────────────────────┐        ___ S5'
        │   DETERMINE WHETHER ABNORMALITY OCCURS OR NOT │
        └──────────────────┬───────────────────────┘
                           │
                           ▼
        ┌──────────────────────────────────────────┐        ___ S6
        │       OUTPUT DETERMINATION RESULT          │
        └──────────────────┬───────────────────────┘
                           │
                           ▼
                    ┌─────────────┐
                    │     END     │
                    └─────────────┘
```

[Fig. 10]

[Fig. 11]

**EP 3 730 930 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007085804 A
- JP 2013152215 A
- US 2015351673 A1